# EUROPÄISCHE PATENTSCHRIFT

(11) **EP 1 460 183 B1**
(45) Veröffentlichungstag und Bekanntmachung des Hinweises auf die Patenterteilung: **01.07.2009**
(21) Anmeldenummer: 04006681.3
(22) Anmeldetag: 19.03.2004
(51) Int. Cl.: E02B 15/04, E02B 15/10

(54) **Vorrichtung zur Beseitigung von an oder im Bereich von Oberflächen von Gewässern schwimmenden Verschmutzungen, insbesondere Ölverschmutzungen**
Device for removing contaminants swimming at or near the surface of water bodies, in particular oil slicks
Dispositif d'élimination de contaminants flottants à ou près de la surface des eaux, en particulier de nappes de pétrole

(30) Priorität: 19.03.2003 DE 10312132
(43) Veröffentlichungstag der Anmeldung: 22.09.2004
(73) Patentinhaber: KÖSTER BAUCHEMIE AG, 26607 Aurich (DE)
(72) Erfinder: Terborg, Hermann, 69120 Heidelberg (DE)
(74) Vertreter: Manasse, Uwe

(56) Entgegenhaltungen:
- WO-A2-02/090666
- DE-A1- 1 634 091
- DE-A1- 10 016 919
- FR-A5- 2 238 360
- GB-A- 1 062 407
- SU-A1- 897 935
- US-A- 3 853 768
- US-B1- 6 458 282

## Beschreibung

Die vorliegende Erfindung betrifft eine Vorrichtung zur Beseitigung von an oder im Bereich von Oberflächen von Gewässern schwimmenden Verschmutzungen, insbesondere Ölverschmutzungen.

Zum Beispiel in Hafenbecken sind häufig kleine Ölteppiche in der einen oder anderen Ecke anzutreffen, die sich durch von Schiffen abgelassenes Öl ergeben. Darüber hinaus sammelt sich in "ruhigen Ecken" auch anderer auf oder an der Oberfläche schwimmender Müll und Treibgut.

Die US-3,853,765 offenbart eine Vorrichtung zur Beseitigung von an oder im Bereich von Oberflächen von Gewässern schwimmenden Verschmutzungen, insbesondere Ölverschmutzungen, umfassend einen mindestens teilweise eintauchend schwimmfähigen Sammelbehälter mit einer Behälterwand, einem Behälterboden, einer Behälteroberseite, einer in dem Behälterboden ausgebildeten Behälterbodenöffnung und mindestens einer in der Behälteroberseite ausgebildeten Einlaßöffnung, wobei die Einlaßöffnung für im Einsatz den Sammelbehälter zumindest teilweise umgebendes Wasser in Abhängigkeit vom Wasserstand in dem Sammelbehälter zugängig machbar ist, mindestens eine Absaugeinrichtung zum Absaugen von Wasser aus dem Sammelbehälter durch die Behälterbodenöffnung, mindestens eine Strömungsgleichrichtereinrichtung zur Gleichrichtung der Strömung in dem Sammelbehälter von der Einlaßöffnung in Richtung zum Behälterboden, und eine Steuereinrichtung zur Steuerung des Betriebs der Absaugeinrichtung in der Weise, daß die Überlaufkante des Zugangs von im Einsatz den Sammelbehälter zumindest teilweise umgebendem Wasser so kontrolliert wird, daß nur die Oberfläche des Gewässers abgesaugt wird, wobei die Steuereinrichtung mindestens einen Nivellierkörper umfaßt, der dazu geeignet ist, wahlweise mit Wasser oder Luft befüllt zu werden, und so erlaubt, den Auftrieb der Vorrichtung gezielt zu beeinflussen.

Die DE 100 16 919 A1 betrifft eine Vorrichtung zum Absaugen von Öl von einer Wasseroberfläche, bei der an der Überlaufkante der Einlaßöffnung eine schwimmergesteuert schwenkbare Klappe angebracht ist, wobei der Schwimmer auf dem Wasser im Sammelbehälter schwimmt.

Die US-6,458,282 B1 betrifft ein Verfahren und eine Vorrichtung zur Trennung von aufschwimmenden Verschmutzungen, wobei bei der Vorrichtung die Überlaufkante der Einlaßöffnung als schwimmergesteuert vertikal verfahrbare Wand ausgebildet ist und der Schwimmer auf dem Wasser im Sammelbehälter schwimmt.

Der Erfindung liegt somit die Aufgabe zugrunde, eine Vorrichtung zu schaffen, mittels derer Verschmutzungen nur im Bereich der Gewässeroberfläche auf besonders leichte Weise beseitigbar sind.

Erfindungsgemäß wird diese Aufgabe gelöst durch eine Vorrichtung zur Beseitigung von an oder im Bereich von Oberflächen von Gewässern schwimmenden Verschmutzungen, insbesondere Ölverschmutzungen, umfassend einen mindestens teilweise eintauchend schwimmfähigen Sammelbehälter mit einer Behälterwand, einem Behälterboden, einer Behälteroberseite, einer in dem Behälterboden ausgebildeten Behälterbodenöffnung und mindestens einer in der Behälteroberseite ausgebildeten Einlaßöffnung, mindestens eine schwimmergesteuert schwenkbare Klappe bzw. mindestens eine schwimmergesteuert vertikal verfahrbare Wand zum schwimmergesteuerten Erschließen der Einlaßöffnung für im Einsatz den Sammelbehälter zumindest teilweise umgebendes Wasser in Abhängigkeit vom Wasserstand in dem Sammelbehälter, mindestens eine Absaugeinrichtung zum Absaugen von Wasser aus dem Sammelbehälter durch die Behälterbodenöffnung, mindestens eine Strömungsgleichrichtereinrichtung zur Gleichrichtung der Strömung in dem Sammelbehälter von der Einlaßöffnung in Richtung zum Behälterboden, und eine Steuereinrichtung zur Steuerung des Betriebs der Absaugeinrichtung in der Weise, daß der beziehungsweise die Schwimmer zur Steuerung des Zugangs von im Einsatz den Sammelbehälter zumindest teilweise umgebendem Wasser kontinuierlich auf beziehungsweise in dem Wasser im Sammelbehälter schwimmt/schwimmen, derart, daß nur die Oberfläche des Gewässers abgesaugt wird, wobei die Steuereinrichtung mindestens einen Nivellierkörper umfaßt, wobei der mindestens eine Nivellierkörper mit je einem klappenförmigen Ventil auf der Oberseite und einem klappenförmigen Ventil auf der Unterseite versehen ist. Dies setzt natürlich voraus, daß der Sammelbehälter so gestaltet und/oder in das Wasser eingetaucht ist, daß der beziehungsweise die Schwimmer überhaupt auf beziehungsweise in dem Wasser im Sammelbehälter schwimmen kann/können. Es ist also wichtig, daß der Auftrieb des Sammelbehälters nicht zu groß wird. Sollte dies doch der Fall sein, so müßte die Behälteroberseite entsprechend verjüngt werden.

Günstigerweise ist der Sammelbehälter mit mindestens einem gesteuert flutbaren Schwimmkörper versehen. Dadurch läßt sich die Eintauchtiefe des Sammelbehälters genau bestimmen.

Günstigerweise umfaßt die Absaugeinrichtung mindestens eine Pumpe.

Schließlich ist vorteilhafterweise eine Absaugeinrichtung zum Absaugen von in dem Behälter gesammelten Verschmutzungen vorgesehen.

Der Erfindung liegt die überraschende Erkenntnis zugrunde, daß durch geeignete Gestaltung des Sammelbehälters mit oben angeordneter Einlaßöffnung und durch Vorsehen einer Absaugeinrichtung eine Regulierung des Zulaufes entsprechend dem Wasserstand im Sammelbehälter mittels Schwimmer in der Weise erreicht wird, daß nur Verschmutzungen im Bereich der Gewässeroberfläche abgesaugt werden.

Die Gleichrichtereinrichtung dient zur Beruhigung des in den Sammelbehälter durch die Einlaßöffnung fließenden Wassers, damit zum Beispiel Öl nicht bis nach unten durch den Behälterboden herausgesaugt wird beziehungsweise durch Verwirbelung gemeinsam mit dem Wasser herausgesaugt wird.

Die erfindungsgemäße Vorrichtung erlaubt sogar die Absaugung von Laub und anderem an der Oberfläche eines Gewässers schwimmendem Müll.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:
- Figur 1: eine perspektivische teilweise weggebrochene Ansicht einer Vorrichtung im Einsatz, die nicht Gegenstand der beanspruchten Erfindung ist;
- Figur 2: eine Schnittansicht einer Vorrichtung gemäß einer besonderen Ausführungsform der Erfindung mit verschlossener Einlaßöffnung.

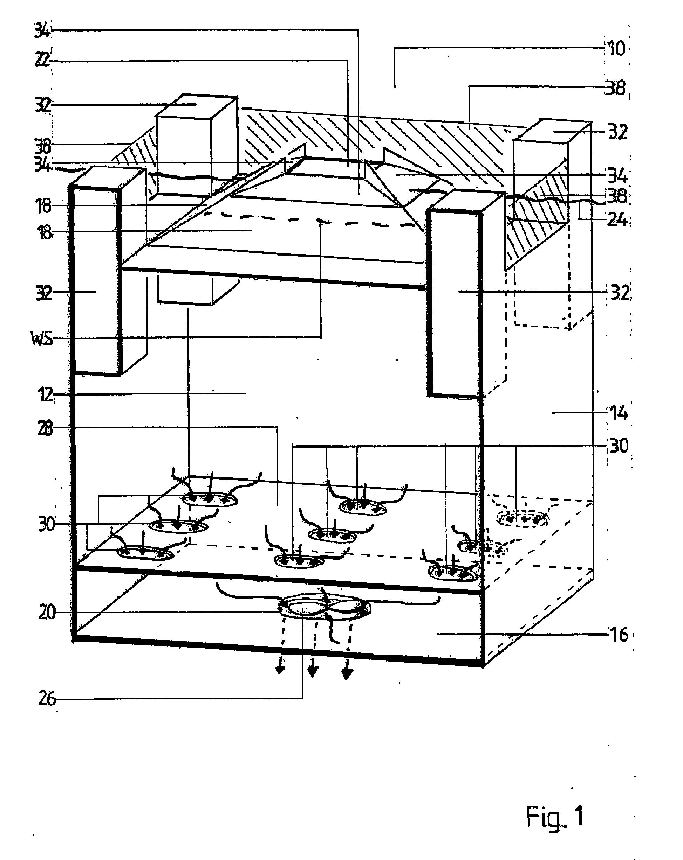

Die in der Figur 1 gezeigte Vorrichtung 10 umfaßt einen teilweise eintauchend schwimmfähigen Sammelbehälter 12 mit einer umlaufenden Behälterwand 14, einem Behälterboden 16, einer Behälteroberseite 18, einer in dem Behälterboden 16 ausgebildeten Behälterbodenöffnung 20 und einer in der Behälteroberseite 18 ausgebildeten Einlaßöffnung 22, die für den Sammelbehälter 12 umgebendes Wasser 24 in Abhängigkeit vom Wasserstand WS in dem Sammelbehälter 12 schwimmergesteuert zugängig machbar ist, eine Absaugeinrichtung zum Absaugen von Wasser aus dem Sammelbehälter 12 durch die Behälterbodenöffnung 20, die einen Propeller 26 im Bereich der Behälterbodenöffnung 20 umfaßt, und eine Strömungsgleichrichtereinrichtung zur Gleichrichtung der Strömung in dem Sammelbehälter 12 von der Einlaßöffnung 22 in Richtung zum Behälterboden 16, die eine in dem Sammelbehälter 12 parallel zum Behälterboden 16 angeordnete Zwischenebene 28 mit in einem Raster angeordneten Öffnungen, von denen lediglich vier gezeigt und mit dem Bezugszeichen 30 gekennzeichnet sind, umfaßt. Der Sammelbehälter 12 weist an seinen oberen vier Ecken jeweils einen gesteuert flutbaren Schwimmkörper 32 auf. Die Behälteroberseite 18 ist kegelstumpfförmig ausgebildet, wobei die Einlaßöffnung 22 in der Mitte der Behälteroberseite 18 ausgebildet ist.

Die Behälterbodenöffnung 20 ist in der Mitte des Behälterbodens 16 ausgebildet.

Die Einlaßöffnung 22 ist mittels zweier schwimmergesteuert schwenkbarer Klappen 34 in Abhängigkeit vom Wasserstand WS in dem Sammelbehälter 12 zugängig machbar. Je ein für die Steuerung vorgesehener Schwimmer 36 ist an der Unterseite der jeweiligen Klappe 34 an der zu der Einlaßöffnung 22 zeigenden Vorderkante angeordnet.

Zwischen den Schwimmkörpern 32 sind sich vertikal erstreckende Fangnetze 38 zum Abfangen von grobem Schmutz angeordnet.

In Figur 1 ist gestrichelt eingezeichnet, wie der Behälter im Inneren zur Behälteroberseite 18 hin verjüngt werden könnte, um den Auftrieb des Behälters zu reduzieren oder sogar so gering wie möglich zu gestalten.

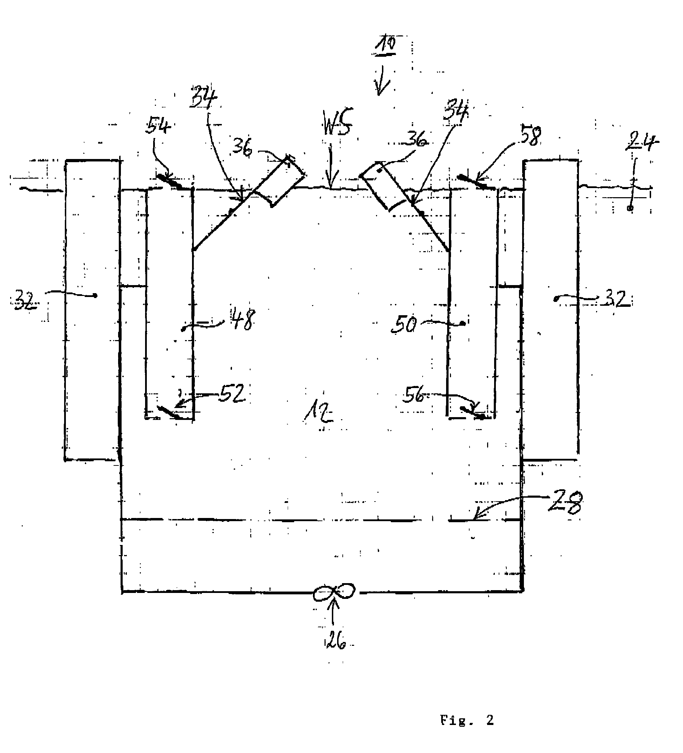

Bei der in Figur 2 gezeigten Vorrichtung 10 sind zwei Nivellierkörper 48 und 50 vorgesehen, die jeweils unten ein Ventil 52 beziehungsweise 56 und oben ein Ventil 54 beziehungsweise 58 aufweisen. Besagte Ventile 52, 54, 56 und 58 sind jeweils als nach oben schwenkbare Klappen ausgebildet. Wenn die Vorrichtung 10 von unten geflutet wird, schwenken somit die Klappen der Ventile 52 und 56 nach oben, so dass die Nivellierkörper 48 und 50 von unten geflutet werden, wobei die Klappen der Ventile 54 und 58 zum Entweichenlassen von Luft dienen. Wenn danach der Wasserstand WS in dem Sammelbehälter 12 durch Inbetriebnahme der Absaugeinrichtung, hier in Form eines Propellers 26, abgesenkt wird, wird der Sammelbehälter 12 leichter und steigt er auf, wobei das nunmehr durch Herunterschwenken der Klappen der Ventile 52 und 56 in den Nivellierkörpern 48 und 50 gefangene Wasser als Gegengewicht dient, um zu verhindern, dass die Vorrichtung 10 so viel Auftrieb bekommt, dass der Wasserspiegel WS über den Drehpunkten der Klappen 34, 34 steht und kein Wasser in den Sammelbehälter von außen fließt.

In allen vorangehend beschriebenen Ausführungformen, aber auch ganz allgemein, können die nach dem Absaugen der Gewässeroberfläche in dem Behälter aufgenommenen Verschmutzungen durch eine dafür extra vorgesehene Absaugeinrichtung abgesaugt werden.

Es ist auch denkbar, daß nach dem Absaugen der Gewässeroberfläche der Behälter durch Schließen der Behälterbodenöffnung geschlossen und nachfolgend aus dem Gewässer herausgenommen wird, so daß dann die Verschmutzungen aus dem Behälter abgelassen oder durch eine dafür vorgesehene Absaugeinrichtung abgesaugt werden können.

Dabei ist insbesondere denkbar, daß nach Absaugen der Gewässeroberfläche die Schwimmkörper 32, vorzugsweise langsam, mit Preßluft gefüllt werden, so daß der gesamte Behälter langsam aufschwimmt. Dies kann solange durchgeführt werden, bis unten aus dem Behälter die Verschmutzungen austreten. Dann wird der Behälter geschlossen und insgesamt aus dem Gewässer gezogen. Danach können die Verschmutzungen aus dem Behälter abgelassen werden oder durch eine dafür vorgesehene Absaugeinrichtung abgesaugt werden.

## Patentansprüche

1. Vorrichtung (10) zur Beseitigung von an oder im Bereich (42) von Oberflächen von Gewässern schwimmenden Verschmutzungen, insbesondere Ölverschmutzungen, umfassend
einen mindestens teilweise eintauchend schwimmfähigen Sammelbehälter (12) mit einer Behälterwand (14), einem Behälterboden (16), einer Behälteroberseite (18), einer in dem Behälterboden (16) ausgebildeten Behälterbodenöffnung (20) und mindestens einer in der Behälteroberseite (18) ausgebildeten Einlaßöffnung (22), wobei die Einlaßöffnung (22) für im Einsatz den Sammelbehälter (12) zumindest teilweise umgebendes Wasser (24) in Abhängigkeit vom Wasserstand (WS) in dem Sammelbehälter (12) mit Hilfe mindestens eines Schwimmersm zugängig machbar ist,
mindestens eine Absaugeinrichtung zum Absaugen von Wasser (24) aus dem Sammelbehälter (12) durch die Behälterbodenöffnung (20),
mindestens eine Strömungsgleichrichtereinrichtung zur Gleichrichtung der Strömung in dem Sammelbehälter (12) von der Einlaßöffnung (22) in Richtung zum Behälterboden (16), und
eine Steuereinrichtung zur Steuerung des Betriebs der Absaugeinrichtung in der Weise, daß der beziehungsweise die Schwimmer zur Steuerung des Zugangs von im Einsatz den Sammelbehälter (12) zumindest teilweise umgebendem Wasser (24) kontinuierlich auf beziehungsweise in dem Wasser (24) im Sammelbehälter (12) schwimmt/schwimmen, derart, daß nur die Oberfläche des Gewässers abgesaugt wird, wobei die Steuereinrichtung mindestens einen Nivellierkörper (48, 50) umfaßt, **dadurch gekennzeichnet, daß** der mindestens eine Nivellierkörper mit je einem klappenförmigen Ventil (54 bzw. 58) auf der Oberseite und einem klappenförmigen Ventil (52 bzw. 56) auf der Unterseite versehen ist und die Einlaßöffnung (22) mittels mindestens einer schwimmergesteuert schwenkbarer Klappe bzw. mindestens einer schwimmergesteuert vertikal verfahrbaren Wand in Abhängigkeit vom Wasserstand (WS) im Sammelbehälter (12) zugängig machbar ist.

2. Vorrichtung (10) nach Anspruch 1, **dadurch gekennzeichnet, daß** der Sammelbehälter (12) mit mindestens einem gesteuert flutbaren Schwimmkörper (32) versehen ist.

3. Vorrichtung (10) nach Anspruch 1 oder 2, **dadurch gekennzeichnet, daß** die Absaugeinrichtung mindestens eine Pumpe umfaßt.

4. Vorrichtung (10) nach einem der vorangehenden Ansprüche, **dadurch gekennzeichnet, daß** eine Absaugeinrichtung zum Absaugen von in dem Behälter gesammelten Verschmutzungen vorgesehen ist.

## Claims

1. Device (10) for removing contaminants floating at or in the region (42) of surfaces of water bodies, in particular oil slicks, comprising
a collection vessel (12), which is capable of floating when at least partially immersed, having a vessel wall (14), a vessel base (16), a vessel upper side (18), a vessel base opening (20) formed in the vessel base (16) and at least one inlet opening (22) formed in the vessel upper side (18), wherein the inlet opening (22) can be made accessible to water (24) at least partially surrounding the collection vessel (12) in use as a function of the water level (WS) in the collection vessel (12) with the help of at least one float,
at least one suction extraction device for extracting water (24) by suction from the collection vessel (12) through the vessel base opening (20),
at least one flow rectifier device for rectifying the flow in the collection vessel (12) from the inlet opening (22) in the direction of the vessel base (16), and
a control device for controlling the operation of the suction extraction device in such a way that the float(s) for controlling access of water (24) at least partially surrounding the collection vessel (12) in use floats/float continuously on or in the water (24) in the collection vessel (12) such that only the surface of the water body is extracted by suction, wherein the control device comprises at least one levelling body (48, 50), **characterised in that** the at least one levelling body is provided with in each case a flap-shaped valve (54 or 58) on the upper side and a flap-shaped valve (52 or 56) on the lower side and the inlet opening (22) can be made accessible by means of at least one flap which is pivotable with the control of a float or at least one wall which can be moved vertically with the control of a float as a function of the water level (WS) in the collection vessel (12).

2. Device (10) according to Claim 1, **characterised in that** the collection vessel (12) is provided with at least one flotation body (32) which can be flooded in a controlled manner.

3. Device (10) according to Claim 1 or 2, **characterised in that** the suction extraction device comprises at least one pump.

4. Device (10) according to one of the preceding claims, **characterised in that** a suction extraction device for extraction by suction of contaminants collected in the vessel is provided.

## Revendications

1. Dispositif (10) pour l'élimination de contaminants flottants à ou près de la surface des eaux, en particulier de nappes de pétrole, comprenant :
un récipient de collecte (12), susceptible de flotter en s'immergeant au moins partiellement, avec une paroi de récipient (14), un fond de récipient (16), une face supérieure de récipient (18), une ouverture de fond de récipient (20), réalisée dans le fond de récipient (16), et une ouverture d'admission (22), réalisée dans la face supérieure de récipient (18), l'ouverture d'admission (22) étant susceptible d'être rendue accessible, à l'aide d'au moins un flotteur, à l'eau (24) entourant au moins partiellement le récipient de collecte (12) en utilisation, en fonction du niveau d'eau (WS) dans le récipient de collecte (12),
au moins un dispositif d'aspiration, pour aspirer de l'eau (24) hors du récipient de collecte (12), à travers l'ouverture de fond de récipient (20),
au moins un dispositif redresseur d'écoulement, pour redresser l'écoulement dans le récipient de collecte (12), à partir de l'ouverture d'admission (22) en direction du fond de récipient (16), et
un dispositif de commande, pour commander le fonctionnement du dispositif d'aspiration, de manière que le, respectivement les flotteur(s) servant à la commande de l'accès de l'eau (24) entourant au moins partiellement le récipient de collecte (12) pendant le fonctionnement flotte/flottent de manière continue sur, respectivement dans l'eau (24) se trouvant dans le récipient de collecte (12), de manière que ne soit aspirée que la surface de l'eau, le dispositif de commande comprenant au moins un corps de nivellement (48, 50), **caractérisé en ce que** le au moins un corps de nivellement est muni respectivement d'une soupape (54 ou 58) en forme de clapet, sur la face supérieure, et d'une soupape (52 ou 56) en forme de clapet, sur la face inférieure, et l'ouverture d'admission (22) est susceptible d'être rendue accessible, à l'aide d'au moins un clapet pivotant commandé par flotteur ou d'au moins une paroi déplaçable verticalement, sous la commande d'un flotteur, en fonction du niveau d'eau (WS) dans le récipient de collecte (12).

2. Dispositif (10) selon la revendication 1, **caractérisé en ce que** le récipient de collecte (12) est muni d'au moins un corps de flotteur (32) susceptible d'être rempli de façon commandée.

3. Dispositif (10) selon la revendication 1 ou 2, **caractérisé en ce que** le dispositif d'aspiration comprend au moins une pompe.

4. Dispositif (10) selon l'une quelconque des revendications précédentes, **caractérisé en ce qu'**un dispositif d'aspiration est prévu, pour aspirer des contaminants accumulés dans le récipient.
